# EUROPÄISCHE PATENTSCHRIFT

(11) **EP 1 032 513 B1**
(45) Veröffentlichungstag und Bekanntmachung des Hinweises auf die Patenterteilung: **04.10.2001**
(21) Anmeldenummer: 98966161.6
(22) Anmeldetag: 23.11.1998
(51) Int. Cl.: B60R 1/00

(54) **VERRIEGELUNGSEINRICHTUNG FÜR LENKUNGEN VON KRAFTFAHRZEUGEN**
LOCKING DEVICE FOR THE STEERING SYSTEM OF MOTOR VEHICLES
DISPOSITIF DE VERROUILLAGE POUR DIRECTION DE VEHICULE

(30) Priorität: 27.11.1997 DE 19752519
(43) Veröffentlichungstag der Anmeldung: 06.09.2000
(73) Patentinhaber: ROBERT BOSCH GMBH, 70442 Stuttgart (DE)
(72) Erfinder: KLAIBER, Tobias, D-71665 Vaihingen-Guendelbach (DE); KAPPENSTEIN, Ulrich, D-75438 Knittlingen (DE); SCHOENAMSGRUBER, Werner, D-71701 Schwieberdingen (DE)
(86) Internationale Anmeldenummer: DE9803449
(87) Internationale Veröffentlichungsnummer: WO9928153

(56) Entgegenhaltungen:
- EP-A- 0 499 001
- WO-A-89/09149
- DE-C- 19 500 682

## Beschreibung

Die Erfindung begriffe eine Verriegelungseinrichtung für Lenkungen von Kraftfahrzeugen mit den im Oberbegriff des Patentanspruchs 1 genannten Merkmalen.

### Stand der Technik

Aus der EP-A-0 499 001 ist eine gattungsgemäße Verriegelungseinrichtung bekannt, bei der eine Gewindewelle mittels eines Elektromotors in Rotation versetzt wird und hierdurch die Verlagerung eines die Gewindewelle kämmenden Verriegelungsgliedes erfolgt. Dadurch, dass hier ein Elektromotor als elektromechanischer Antrieb vorgesehen ist, ergibt sich ein relativ komplizierter Aufbau. Ferner sind hierdurch rotierende Teile der Verriegelungseinrichtung vorzusehen, die einem Verschleiß unterliegen.

Aus der DE-C-195 00 682 ist eine weitere Verriegelungsvorrichtung bekannt, bei der ebenfalls mittels eines Elektromotors eine Sperrvorrichtung verlagerbar ist. Aus der WO-A-89/09149 ist eine Verriegelungsvorrichtung bekannt, bei der eine Sperrvorrichtung von einer Entriegelungs- in eine Verriegelungsstellung mittels zweier Elektromagnete verlagerbar ist.

Es ist allgemein bekannt, daß Kraftfahrzeuge mit Einrichtungen zur Verninderung einer unbefugten Eenutzung ausgerüstet sind. Zu diesem Zweck weisen die meisten Kraftfahrzeuge eine mechanische Verriegelungseinrichtung fur die Lenkung auf.

Eine Lenkungsver- und -entriegelung wird hierbei auf mechanischem Wege mit Hilfe des Zundschlüssels ausgeführt, der einen Exzenter und einen federvorgespannten Schieber betätigt. Durch Drehen des Zündschlussels im Zündschloß, an dessen Ende eine Exzenterscheibe sitzt, wird der Schieber axial bewegt. Diesen Schieber drückt eine Feder stetig in die verriegelte Endlage. Eine Nase am Schieber wiederum verschiebt einen Verriegelungszahnkranz in eine Verzahnung der Lenkwelle. Je nach Endlage des Schiebers ist die Lenkung entweder frei drehbar oder verriegelt. Ist der Zündschlüssel abgezogen, ist die Lenkung verriegelt. Damit ist sichergestellt, daß der Schlüssel nicht versehentlich in der unverriegelten Stellung abgezogen werden kann.

Soll die Lenkung entriegelt werden, muß zunächst der Schlüssel in das Lenkschloß geschoben werden. Nach dem Einstecken und Drehen des Schlüssels drückt die Exzenterscheibe den Schieber aus seiner federbetatigten, verriegelten Endlage. Die Lenkwelle wird freigegeben und damit frei drehbar. Die Verriegelung der Lenkung erfolgt durch Abziehen des Zundschlüssels aus dem Zündschloß. Dadurch gibt die Exzenterscheibe den Schieber frei, und dieser cleitet federbetätigt in die verriegelte Endlage.

Da solche bekannten Lenkungsverriegelungssysteme auf rein mechanischem Wege betätigt werden, und zudem zur Betätigung ein Schlüssel mit herkömmlichem Bart notwendig ist, kommt beispielsweise keine Integration in ein elektronisches Fahrberechtigungssystem mit Code-Eingabe in Frage.

Der Erfindung liegt die Aufgabe zugrunde, eine Verriegelungseinrichtung für Lenkungen von Kraftfahrzeugen zu schaffen, die einfach aufgebaut ist und sich durch einen hohen Bedienkomfort auszeichnet.

### Vorteile der Erfindung

Die erfindungsgemäße Verriegelungseinrichtung mit den im Patentanspruch 1 genannten Merkmalen bietet den Vorteil, daß eine mit wenigen mechanischen Bauteilen realisierte Verriegelungseinrichtung auf elektromechanischem Wege, vorzugsweise mit Hilfe von Elektromagneten, gesteuert wird und damit vorzugsweise einer elektronischen Steuerung und einer Integration in ein elektronisches Wegfahrsperren-System zugänglich wird, ohne daß ein herkömmlicher Zundschlüssel mit Schließzylinder notwendig ist.

Vorteilhafte Ausgestaltungen der Erfindung ergeben sich aus den in den Unteransprüchen genannten Merkmalen.

### Zeichnungen

0ie Erfindung wird nachfolgend in einem Ausfuhrungsbeispiel anhand der zugehörigen Zeichnungen naher erläutert. Es zeigen:
- Figur 1: eine Schnittdarstellung, welche die Einzelteile einer Lenkungsverriegelung zeigt und
- Figur 2: eine Prinzipdarstellung, welche die Verriegelung einer Lenksaule zeigt.

### Beschreibung der Ausführungsbeispiele

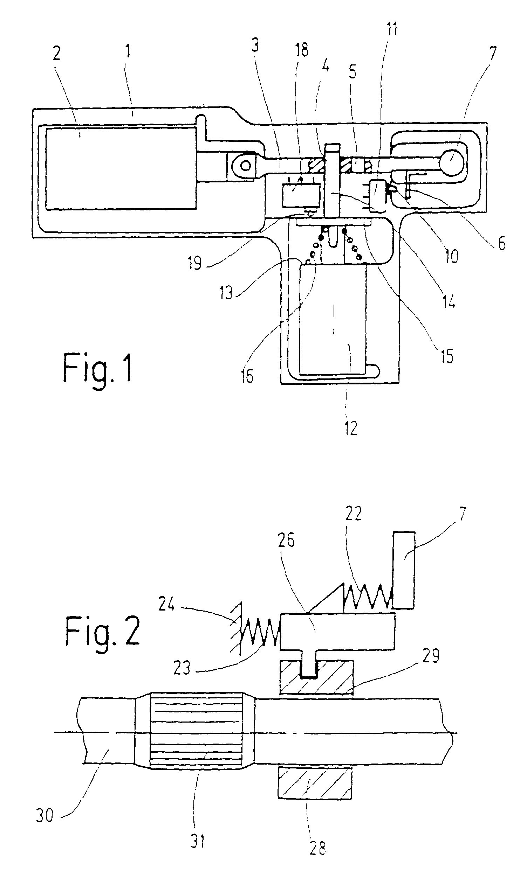

Figur 1 zeigt eine Schnittdarstellung, welche die Anordnung der Einzelteile einer Lenkungsverriegelung zeigt. In der Darstellung sind zwei Elektromagneten, 2 und 12, erkennbar, deren Hubachsen in einem Winkel von 90° zueinander stehen. Der Elektromagnet 2 ist dabei stärker dimensioniert als der Elektromagnet 12. Beispielsweise kann die Hubkraft des Magneten 2 bei ungefähr 20 N liegen, die des Magneten 12 bei ungefähr 3 N. Beide Elektromagneten 2 und 12 sind in einem gemeinsamen Gehäuse 1 fixiert, welches fest mit der Fahrzeugkarosserie 24 verbunden ist. Diese Verbindung ist hier jedoch nicht näher dargestellt. Der Elektromagnet 2 ist mit einem länglichen Schieber 3 wirkverbunden und kann diesen durch Anlegen einer Spannung axial verschieben. Der Schieber 3 weist zwei Durchbrüche 4 und 5, beispielsweise in Form von Bohrungen auf. In die Durchbrüche 4 und 5 kann jeweils ein Riegelbolzen 14 eingreifen, der mit dem Elektromagneten 12 verbunden ist und von diesem axial bewegt werden kann. Erst wenn der Elektromagnet 12 mit Spannung beaufschlagt wird, zieht er den Riegelbolzen 14 gegen die Federkraft einer sich zwischen einem Absatz 15 des Riegelbolzens 14 und einer Gehäusestirnseite 13 des Elektromagneten 12 abstutzenden Druckfeder 16, wobei diese Druckfeder 16 zweckmäßig als Spiralfeder ausgeführt ist. Damit gibt der Riegelbolzen 14 den Schieber 3 frei. Erst dann kann der Elektromagnet 2 den Schieber 3 axial verschieben. Zur Abfrage der aktuellen Position des Schiebers 3 weist dieser einen Winkel 6 auf, der den Kopf 10 eines Druckschalters 11 drückt oder freigibt. Ebenso ist am Riegelbolzen 14 ein Druckschalter 18 angeordnet, dessen Kopf 19 bei ausgeschaltetem Elektromagneten 12 vom Absatz 15 des Riegelbolzens 14 niedergedrückt wird. Erst wenn der Elektromagnet 12 mit Spannung beaufschlagt wird, wird der Kopf 19 des Schalters 18 freigegeben. Der Schalter 18 liefert auf diese Weise eine Information über die aktuelle Position des Riegelbolzens 14. Der Schieber 3 weist an seinem Ende einen Kopf 7 auf.

Wie anhand von Figur 2 näher verdeutliche wird, ist dieser Kopf 7 über eine Feder 22 mit einem Schieber 26 verbunden, der an der Lenksäule befestigt und achsparallel zur Lenkwelle 30 verschieblich ist. Der Schieber 26 verschiebt einen die Lenkwelle 30 umgreifenden Verriegelungsring 28, der mit seiner Innenverzahnung 29 in eine auf der Lenkwelle 30 aufgebrachte passende Außenverzahnung 31 eingreifen kann.

Es sollen im folgenden die Funktion der Lenkungsverriegelung unter Bezugnahme auf die beiden Figuren 1 und 2 näher beschrieben werden, ausgehend von der Ausgangsstellung einer nicht verriegelten Lenkung.

Um die Lenkung zu verriegeln, muß zunächst der Elektromagnet 12 mit Spannung beaufschlagt werden. Daraufhin wird gegen die Federkraft der Feder 16 der Riegelbolzen 14 verschoben, der damit den Schieber 3 freigibt. Die jeweilige Endlage des Riegelbolzens 14 wird über den Schalter 18 permanent abgefragt. Der in dem Gehäuse 1 geführte Schieber 3 verrichtet nach Einschalten des Elektromagneten 2 einen Langshub. Dabei wird der in der Lenksäule sitzende Schieber 26, der in den Verriegelungsring 28 eingreift, auf der Lenkwelle 30 axial verschoben und verriegelt somit die Lenkwelle 30. Sollte die angelegte Spannung abgeschaltet werden, drückt die Feder 23 den gesamten Mechanismus wieder in seine Ausgangslage zurück. Wird nach Ausführen des Hubes des Schiebers 3 am Schalter 11 das Erreichen der Endlage signalisiert, muß die Spannung am Magneten 12 abgeschaltet werden. Die Feder 16 drückt den Pienelbolzen 14 in dessen vordere Endlage und sichert somit den Schieber 3 in seiner erreichten Endlage. Dies signalisiert ein Schalter 18. Die somit erreichte Endstellung der verriegelten Lenkunn ist gleichzeitig die neue Ausgangsstellung.

Zum Entriegeln der Lenkung wird zunachst der Elektromagnet 2 mit Spannung beaufschlagt, danach der Elektromagnet 12. Nach dem Abschalten der Spannung am Elektromagneten 2 fährt der Mechanismus in seine Ausgangslage zurück. Nun kann auch die Spannung am Elektromagneten 12 abgeschaltet werden. Die Feder 16 drückt den Riegelbolzen 14 in dessen vordere Endlage und sichert somit den Schieber 3 in seiner erreichten Endlage. Dies signalisiert wiederum der Schalter 18. Die Lenkung ist somit wieder freigegeben.

Neben diesen beiden vorgesehenen Zuständen kann es im Betrieb durchaus vorkommen, daß die Steuerungseinrichtung eine Verriegelung der Lenkung auslost, aber die Verzahnungen an der Lenkwelle 30 und am Verriegelungsring 28 nicht passend zueinander stehen und damit nicht ineinander greifen können. Es muß jedoch auch in einer solchen Stellung eine Verriegelung der Lenkung sicher durchgeführt werden können. Die Vorgänge laufen wie oben beschrieben ab. Tritt nun der Sonderfall der nicht ineinandergreifenden Verzahnungen ein, steht der Verriegelungsring 28 federvorgespannt durch die Feder 22 an der Verzahnung der Lenkwelle 30 an. Beim nächsten Drehen des Lenkrades in beliebiger Drehrichtung spurt der Verriegelungsring 28 in die Verzahnung der Lenkwelle 30 ein. Die Federkraft der Feder 22 liegt dabei spurbar höher als die der Feder 23, um eine Dominanz gegenüber dem Zurückfahren des Mechanismus sicherzustellen.

## Patentansprüche

1. Verriegelungseinrichtung für Lenkungen von Kraftfahrzeugen, mit einer Sperrvorrichtung, mittels der eine Lenkwelle arretierbar und somit die Drehung eines Lenkrades und damit das Einschlagen von Fahrzeugrädern verhinderbar ist, wobei die Sperrvorrichtung elektromechanisch zwischen zwei Endstellungen, nämlich entriegelt und verriegelt, verlagerbar ist, **dadurch gekennzeichnet, dass** die Lenkwelle (30) eine konzentrische Außenverzahnung (31) aufweist, der Außenverzahnung (31) ein mittels eines Elektromagneten (2) axial zur Lenkwelle (30) verschieblich gelagerter Verriegelungsring (28) zugeordnet ist, wobei eine Innenverzahnung (29) des Verriegelungsringes (28) mit der Außenverzahnung (31) in Eingriff bringbar ist, so **dass** die Lenkwelle (30) im verriegelten Zustand nicht mehr verdrehbar ist, und der Verriegelungsring (28) durch eine erste, in Verriegelungsrichtung wirkende Druckfeder (22) und eine zweite, in Entriegelungsrichtung wirkende Druckfeder (23) kraftbeaufschlagt ist, und die Federkraft der Druckfeder (22) der Verriegelungseinrichtung stärker als die Federkraft der Druckfeder (23) der Entriegelungseinrichtung, jedoch schwächer als eine in Verriegelungsrichtung wirkende Hubkraft des Elektromagneten (2) ist.

2. Verriegelungseinrichtung nach Anspruch 1, **dadurch gekennzeichnet, daß** der die Lenkwelle (30) umgreifende Verriegelungsring (28) über einen Schieber (3) axial durch den Elektromagneten (2) verschieblich ist.

3. Verriegelungseinrichtung nach Anspruch 1, **dadurch** 3. **gekennzeichnet,** daß sich ein weiterer Schieber (26) über die zweite Feder (23) am Gehäuse (24) oder der Karosserie des Fahrzeuges abstützt und über die erste Feder (22) die Verbindung zum Schieber (3) besteht.

4. Verriegelungseinrichtung nach einem der vorhergehenden Ansprüche, **dadurch gekennzeichnet, daß** der Schieber (3) zwei Durchbrüche (4, 5) aufweist, in die ein Riegelbolzen (14) senkrecht eingreifen kann.

5. Verriegelungseinrichtung nach Anspruch 4, **dadurch gekennzeichnet, daß** der Riegelbolzen (14) axial, das heißt senkrecht zur Bewegungsrichtung des Schiebers (3), gegen eine Federkraft einer Druckfeder (16) von einem Elektromagneten (12) betätigt werden kann und damit den Schieber (3) freigeben oder durch Einrasten entweder in den Durchbruch (4) oder (5) in zwei Stellungen verriegeln kann.

6. Verriegelungseinrichtung nach Anspruch 5, **dadurch gekennzeichnet, daß** die aktuelle Position des Schiebers (3) uber einen Endschalter (10) und die aktuelle Position des Riegelboizens (14) über einen Endschalter (18) erfaßt wird.

7. Verriegelungseinrichtung nach Anspruch 6, **dadurch gekennzeichnet, daß** die Betätigung der beiden Elektromagneten (2, 12) elektronisch gesteuert und überwacht wird.

8. Verriegelungseinrichtung nach Anspruch 7, **dadurch gekennzeichnet, daß** die elektromagnetisch betatigte Verriegelungseinrichtung in ein elektronisches Wegfahrsperrensystem des Kraftfahrzeuges integriert ist.

## Claims

1. Locking device for steering systems of motor vehicles, having an arrester device by means of which a steering shaft can be arrested, and therefore the rotation of a steering wheel and thus the locking of vehicle wheels can be prevented, the arrester device being electromagnetically displaceable between two end positions, specifically the released position and locked position, **characterized in that** the steering shaft (30) has a concentric outer toothing (31), a locking ring (28) which is mounted so as to be axially displaceable with respect to the steering shaft (30) by means of an electromagnet (2) is assigned to the outer toothing (31), an inner toothing (29) of the locking ring (28) being capable of being engaged with the outer toothing (31) so that the steering shaft (30) can no longer be rotated in the locked state, and the locking ring (28) has force being applied to it by a first compression spring (22) acting in the locking direction, and by a second compression spring (23) acting in the release direction, and the spring force of the compression spring (22) of the locking device is greater than the spring force of the compression spring (23) of the release device, but weaker than a lifting force of the electromagnet (2) acting in the locking direction.

2. Locking device according to Claim 1, **characterized in that** the locking ring (28) which engages around the steering shaft (30) can be axially displaced by the electromagnet (2) by means of a slide (3).

3. Locking device according to Claim 1, **characterized in that** a further slide (26) is supported on the housing (24) or the bodywork of the vehicle by means of the second spring (23), and the connection to the slide (3) is via the first spring (22).

4. Locking device according to one of the preceding claims, **characterized in that** the slide (3) has two openings (4, 5) into which a locking bolt (14) can engage perpendicularly.

5. Locking device according to Claim 4, **characterized in that** the locking bolt (14) can be activated axially, that is to say perpendicularly with respect to the direction of movement of the slide (3), by an electromagnet (12) counter to a spring force of a compression spring (16), and the slide (3) can thus be released or locked in two positions by latching either into the opening (4) or the opening (5).

6. Locking device according to Claim 5, **characterized in that** the current position of the slide (3) is sensed by means of a limit switch (10) and the current position of the locking bolt (15) is sensed by means of a limit switch (18)

7. Locking device according to Claim 6, **characterized in that** the actuation of the two electromagnets (2, 12) is controlled and monitored electronically.

8. Locking device according to Claim 7, **characterized in that** the electromagnetically activated locking device is integrated into an electronic immobiliser system of the motor vehicle.

## Revendications

1. Dispositif de verrouillage pour direction de véhicule, comportant un dispositif de blocage permettant d'immobiliser l'arbre du volant, en empêchant ainsi la rotation du volant et donc le braquage des roues, le dispositif de verrouillage pouvant se déplacer électromécaniquement entre deux positions extrêmes à savoir de verrouillage et de déverrouillage,
**caractérisé en ce que**
- l'arbre de direction (30) porte une denture extérieure concentrique (31) à laquelle est associée une bague de verrouillage (28) pouvant coulisser axialement par rapport à l'arbre de direction (30) sous l'action d'un électroaimant (2),
- une denture interne (29) de la bague de verrouillage (28) peut venir engrener avec la denture externe (31) de sorte que l'arbre de direction (30), à l'état verrouillé, ne peut plus tourner,
- la bague de verrouillage (28) est soumise à l'action d'un premier ressort de poussée (22) agissant dans le sens du verrouillage, et d'un second ressort de poussée (23) agissant dans le sens du déverrouillage, la force du premier ressort (22) du dispositif de verrouillage étant supérieure à celle du second ressort (23) du dispositif de déverrouillage, mais inférieure à la force de poussée, s'exerçant dans le sens de verrouillage, de l'électroaimant (2).

2. Dispositif de verrouillage selon la revendication 1,
**caractérisé en ce que**
la bague de verrouillage (28) entourant l'arbre de direction (30) peut coulisser axialement par l'intermédiaire d'un coulisseau (3) actionné par l'électroaimant (2).

3. Dispositif de verrouillage selon la revendication 1,
**caractérisé en ce qu'**
un autre coulisseau (26) s'appuie par l'intermédiaire du second ressort (23) sur le boîtier (24) ou sur la carrosserie du véhicule et, par l'intermédiaire du premier ressort (22) établit la liaison avec le coulisseau (3).

4. Dispositif de verrouillage selon l'une quelconque des revendications précédentes,
**caractérisé en ce que**
le coulisseau (3) est percé de deux passages (4, 5) dans lesquels une broche de verrou (14) peut s'engager perpendiculairement.

5. Dispositif de verrouillage selon la revendication 4,
**caractérisé en ce que**
la broche de verrou (14) peut être actionnée axialement par un électroaimant (12), c'est-à-dire perpendiculairement à la direction de déplacement du coulisseau (3) contre l'action d'un ressort de poussée (16), et elle peut donc libérer le coulisseau (3), ou produire le verrouillage dans deux positions, en s'engageant soit dans le passage (4), soit dans le passage (5).

6. Dispositif de verrouillage selon la revendication 5,
**caractérisé en ce que**
la position actuelle du coulisseau (3) est détectée par un contacteur de fin de course (10) et la position actuelle de la broche de verrou (14) est détectée par un contacteur de fin de course (18).

7. Dispositif de verrouillage selon la revendication 6,
**caractérisé en ce que**
l'actionnement des deux électroaimants (2, 12) est commandé et surveillé électroniquement.

8. Dispositif de verrouillage selon la revendication 7,
**caractérisé en ce que**
le dispositif de verrouillage actionné électromagnétiquement est intégré à un système électronique d'antidémarrage du véhicule.
